# EUROPÄISCHE PATENTSCHRIFT

(11) **EP 3 257 568 B1**
(45) Veröffentlichungstag und Bekanntmachung des Hinweises auf die Patenterteilung: **18.09.2019**
(21) Anmeldenummer: 16174299.4
(22) Anmeldetag: 14.06.2016
(51) Int. Cl.: B01D 53/26, B01D 53/28, F25B 15/06, F24F 3/14

(54) **VERFAHREN ZUR ENTFEUCHTUNG VON FEUCHTEN GASGEMISCHEN MIT IONISCHEN FLÜSSIGKEITEN**
METHOD FOR THE REMOVAL OF MOISTURE FROM MOIST GAS MIXTURES BY USE OF IONIC LIQUIDS
PROCEDE DE DESHUMIDIFICATION DE MELANGES GAZEUX HUMIDES PAR DES LIQUIDES IONIQUES

(43) Veröffentlichungstag der Anmeldung: 20.12.2017
(73) Patentinhaber: Evonik Degussa GmbH, 45128 Essen (DE)
(72) Erfinder: IRFAN, Muhammad, 63517 Rodenbach (DE); ROLKER, Jörn, 63755 Alzenau (DE); SCHNEIDER, Rolf, 63584 Gründau-Rothenbergen (DE)
(74) Vertreter: Evonik Patent Association

(56) Entgegenhaltungen:
- EP-A1- 0 193 327
- WO-A1-2006/134015
- US-A1- 2011 247 494

## Beschreibung

Die Erfindung betrifft ein Verfahren zur Entfeuchtung eines feuchten Gasgemisches nach Anspruch 1 sowie das im Verfahren verwendete Absorptionsmedium nach Anspruch 4. Außerdem beschrieben ist auch eine Vorrichtung zur Entfeuchtung eines feuchten Gasgemisches sowie deren Verwendung im erfindungsgemäßen Verfahren.

### Hintergrund der Erfindung

Die Entfeuchtung feuchter Gasgemische ist in einer Vielzahl technischer Gebiete notwendig. So muss bei der Belüftung und Klimatisierung von Gebäuden oder Fahrzeugen die Luft in der Regel nicht nur gekühlt, sondern auch entfeuchtet werden, da die zu kühlende Luft oft eine so hohe Luftfeuchtigkeit aufweist, dass beim Kühlen auf die gewünschte Temperatur der Taupunkt unterschritten wird. In konventionellen Klimaanlagen entfällt deshalb ein großer Teil des Stromverbrauchs auf die Entfeuchtung der Luft.

Um den Stromverbrauch von Klimaanlagen für Gebäude zu senken, wird die Luft durch Adsorption oder Absorption von Wasser mit einem Trocknungsmedium entfeuchtet und im Anschluss das mit Wasser beladene Trocknungsmedium durch Erhitzen auf eine Temperatur, bei der das Wasser wieder desorbiert wird, regeneriert. Eine Absorption in einem flüssigen Absorptionsmedium hat dabei gegenüber einer Adsorption an einem festen Adsorbens den Vorteil, dass die Lufttrocknung apparativ einfacher und mit weniger Trocknungsmedium durchgeführt werden kann und dass die Regenerierung des mit Wasser beladenen Trocknungsmediums einfacher mit Solarwärme durchgeführt werden kann.

Ein weiteres technisches Gebiet, auf dem die Entfeuchtung feuchter Gasgemische zur Anwendung kommt, ist der Bereich der Absorptionskältemaschinen (gleichbedeutend mit "Absorptionswärmepumpe"; Prinzip beschrieben in WO 2014/079675 A1). Hier entsteht das feuchte Gasgemisch bei der Verdampfung von Wasser unter niedrigem Druck. Der so entstehende Wasserdampf muss dem feuchten Gasgemisch entzogen werden, damit es dann wieder der Wasserverdampfung zugeführt werden und einen neuen Zyklus durchlaufen kann. Auch hier ist die Absorption in einem flüssigen Absorptionsmedium der Adsorption an einem festen Adsorptionsmedium überlegen.

Zur Absorption von Feuchtigkeit aus ionischen Flüssigkeiten werden im Stand der Technik eine Reihe von ionischen Flüssigkeiten vorgeschlagen. So nennt die DE 10 2010 004 779 A1 beispielsweise 1-Ethyl-3-methylimidazoliumethylsulfat, 1-Ethyl-3-methylimidazoliummethylsulfat, 1-Ethyl-3-methylimidazoliumdiethylphosphat, 1-Ethyl-3-methylimidazoliummethylsulfonat, 1-Butyl-3-methylimidazoliumbistrifluormethansulfonimid, 1-Butyl-3-ethylimidazoliumchlorid.

Die CN 102335545 A beschreibt eine Reihe von auf Alkylphosphaten basierenden ionischen Flüssigkeiten, nämlich unter anderem 1,3-Dimethyimidazoliumdimethylphosphat, 1-Ethyl-3-methylimidazoliumdimethylphosphat und 1-Butyl-3-methylimidazoliumdimethylphosphat.

In Y. Luo et al., Appl. Thermal Eng. 31 (2011) 2772-2777 wird vorgeschlagen, an Stelle einer wässrigen Lösungen von Lithiumbromid die ionische Flüssigkeit 1-Ethyl-3-methylimidazoliumtetrafluoroborat zur Lufttrocknung einzusetzen. Diese ionische Flüssigkeit weist aber den Nachteil einer nur schlechten Absorptionsfähigkeit auf.

Diese und weitere ionische Flüssigkeiten werden auch von Krannich et al., J. Chem. Eng. Data 61 (2016), 1162-1176 diskutiert.

In Y. Luo et al., Solar Energy 86 (2012) 2718-2724 wird für die Lufttrocknung als Alternative zu 1-Ethyl-3-methylimidazoliumtetrafluoroborat die ionische Flüssigkeit 1,3-Dimethyimidazoliumacetat vorgeschlagen. Die Acetate werden auch von M. Kanakubo et al., J. Mol. Liq. 217 (2016) 112-119 diskutiert.

Die US 2011/0247494 A1 schlägt eine weitere ionische Flüssigkeit, nämlich 1-Ethyl-3-methylimidazoliumacetat, zu diesem Zweck vor.

Die Anwendung dieser ionischen Flüssigkeiten in Absorptionskältemaschinen wird auch in der WO 2013/050242 A1 diskutiert.

Die WO 2006/134015 A1 beschreibt Verfahren zur Entfeuchtung feuchter Gasgemische in Absorptionskältemaschinen. Dabei werden das Acetat und das Methylsulfonat des 1-Ethyl-3-methylimidazoliums als Absorptionsmittel beschrieben.

Die EP 0 193 327 A1 beschreibt Verfahren zur Trocknung von Gasgemischen und beschreibt den Einsatz von Triethylenglykol zur Verbesserung der Viskosität.

Ein wichtiges Kriterium für die Auswahl einer ionischen Flüssigkeit als Absorptionsmedium stellt deren Viskosität dar. So ist es erwünscht, ein möglichst niedrigviskoses Absorptionsmedium einzusetzen, da eine leichtere Fließfähigkeit des Absorptionsmediums dessen Einsatz in der Lufttrocknung deutlich vereinfacht. In einer Absorptionskältemaschine, in der das Absorptionsmedium durch Pumpenleistung bewegt werden muss, ist ein fließfähigeres Absorptionsmedium unter geringerem Energieverbrauch transportierbar, was die Wirtschaftlichkeit einer solchen Kältemaschine deutlich erhöht. Daneben führt eine niedrigere Viskosität auch zu weniger etwa durch Verstopfungen der Hohlräume verursachten Ausfällen.

Solche Verstopfungen haben im Übrigen noch eine weitere Ursache: So wurde beobachtet, dass viele in der Literatur beschriebenen ionischen Flüssigkeiten die Tendenz zeigen, bei Kontakt mit CO₂ auszufallen und so feste Niederschläge zu bilden. Die Anwesenheit von CO₂ in den zu entfeuchtenden Gasströmen ist allerdings in vielen Fällen unvermeidbar und in speziellen Anwendungen, wie zum Beispiel der Entfeuchtung von Erdgas, ist der Anteil von CO₂ im zu entfeuchtenden Gasstrom sehr hoch.

Die Aufgabe der vorliegenden Erfindungen bestand deshalb darin, ein Absorptionsmittel zur Verfügung zu stellen, welche die vorgenannten Probleme nicht aufweist, also eine möglichst geringe Viskosität und eine geringe Tendenz aufweist, bei Kontakt mit CO₂ auszufallen.

Es wurde nun überraschend ein Absorptionsmedium gefunden, das diese Aufgabe löst.

### Detaillierte Beschreibung der Erfindung

Die vorliegende Erfindung betrifft demnach ein Verfahren zur Entfeuchtung eines feuchten Gasgemisches **G₁**, wobei das feuchte Gasgemisch **G₁** CO₂ umfasst und mit einem flüssigen Absorptionsmedium **A₁**, welches eine Mischung aus Triethylenglykol und mindestens einem Salz **S** ausgewählt aus Q⁺A⁻ umfasst, kontaktiert wird, wodurch ein Gasgemisch **G₂**, welches einen gegenüber dem feuchten Gasgemisch **G₁** niedrigeren Wassergehalt aufweist, und ein flüssiges Absorptionsmedium **A₂**, welches einen gegenüber dem flüssigen Absorptionsmedium **A₁** erhöhten Wassergehalt aufweist, erhalten werden, wobei Q⁺ aus der Gruppe bestehend aus 1,3-Dimethylimidazoliumkation, 1,3-Diethylimidazoliumkation, 1-Ethyl-3-methylimidazoliumkation ausgewählt ist, wobei A⁻ ein Anion ausgewählt aus der Gruppe bestehend aus Acetat, Propionat ist, und wobei das Verhältnis des Gesamtgewichts des Triethylenglykols zum Gesamtgewicht aller Salze **S** im flüssigen Absorptionsmedium **A₁** im Bereich 1 : 9 bis 9 : 1 liegt.

Triethylenglykol hat die CAS-Nummer 112-27-6.

"Feucht" bedeutet im Sinne der Erfindung "umfassend Wasser, insbesondere Wasserdampf". "Entfeuchtung" bedeutet erfindungsgemäß "mindestens teilweise Entfernung von Wasser".

"Mindestens teilweise" bedeutet im Sinne der Erfindung "teilweise oder vollständig".

"Feuchtes Gasgemisch **G₁**" bedeutet demnach im Sinne der Erfindung, dass das Gasgemisch **G₁** Wasser, bevorzugt Wasserdampf ("Wasserdampf" bedeutet Wasser im gasförmigen Aggregatszustand), umfasst und seine Zusammensetzung im Übrigen nicht besonders beschränkt ist. Der Wassergehalt des feuchten Gasgemisches ist dabei nicht besonders beschränkt und liegt insbesondere bei 0.01 Vol.-% - 99.99 Vol.-% ("Vol.-%" gibt das Volumen des Wasserdampfes bezogen auf das Gesamtvolumen des feuchten Gasgemisches **G₁** an). Ansonsten kann die Zusammensetzung des feuchten Gases **G₁** je nach Anwendung des erfindungsgemäßen Verfahrens variieren. Das feuchte Gasgemisch **G₁** ist insbesondere ausgewählt aus feuchtem Erdgas, feuchter Luft (bei der es sich um feuchte Raumluft oder der bei der Verdampfung von Wasser in Absorptionskältemaschinen resultierenden feuchten Luft handeln kann), bevorzugt um feuchte Luft. Bei feuchtem Erdgas liegt der Wassergehalt insbesondere bei 0.01 Vol.-% bis 15.00 Vol.-%, bei feuchter Luft bei insbesondere 0.01 Vol.-% bis 5.00 Vol.-%, wenn es sich um feuchte Raumluft handelt, oder insbesondere bei 95.00 Vol.-% bis 99.99 Vol.-%, was der bevorzugte Bereich ist, wenn es sich um bei der Verdampfung von Wasser in Absorptionskältemaschinen resultierende feuchte Luft handelt.

Das Gasgemisch **G₁** umfasst CO₂. Bevorzugt umfasst das Gasgemisch **G₁** CO₂ mit einem Anteil von 1 bis 140000 ppm, bevorzugter 100 ppm bis 20000 ppm, noch bevorzugter 350 ppm bis 10000 ppm.

Der Anteil von CO₂ im Gasgemisch **G₁** kann routinemäßig vom Fachmann z.B. mit kommerziell erhältlichen Geräten (CO₂-Sensoren) oder IR-Spektroskopie bestimmt werden.

Das erfindungsgemäße Verfahren wird insbesondere in einer Vorrichtung **V₁** durchgeführt. Die Vorrichtung **V₁** ist nur insofern beschränkt, als dass sie zur Durchführung des erfindungsgemäßen Verfahrens geeignet sein soll. Insbesondere kann eine Vorrichtung **V₁** eingesetzt werden, die folgende Komponenten umfasst:
(i) mindestens eine Wasserabsorptionseinheit **W_{abs1},** welche dafür eingerichtet ist, das feuchte Gasgemisch **G₁** mit dem flüssigen Absorptionsmedium, insbesondere **A₁**, zu kontaktieren,
(ii) mindestens eine Wasserdesorptionseinheit **W_{des1},** welche einen Wärmetauscher **Wₓ₁** umfasst und welche dafür eingerichtet ist, Wasser aus einem flüssigen Absorptionsmedium, insbesondere **A₂**, mindestens teilweise zu entfernen,
(iii) sowie einen Umlauf **U₁**, welcher die Wasserabsorptionseinheit **W_{abs1}** mit der Wasserdesorptionseinheit **W_{des1}** verbindet und mittels welchem das flüssige Absorptionsmedium, insbesondere **A₁** bzw. **A₂**, im Kreislauf führbar ist.

In der Wasserabsorptionseinheit **W_{abs1}** wird insbesondere das erfindungsgemäße Verfahren durchgeführt. Als Wasserabsorptionseinheit **W_{abs1}** können dabei insbesondere die dem Fachmann bekannten Wasserabsorber eingesetzt werden. Sie beruhen auf dem Prinzip, dass bei der Absorption des Wassers die Oberfläche des flüssigen Absorptionsmediums, insbesondere **A₁**, vergrößert wird und gleichzeitig eine möglichst große Verweilzeit des flüssigen Absorptionsmediums **A₁** im Wasserabsorber erreicht wird. Insbesondere können hier Wasserabsorber ausgewählt aus der folgenden Gruppe eingesetzt werden: Festbett ("*packed* beds"), Sprühkolonne (*"spray columns"*), Fallfilmapparate (*"falling-films"*), Blasensäule ("*bubble columns"*)*,* Kolonnen mit mehreren Böden ("*tray column"*), Nasswäscher (zum Beispiel "*Venturi scrubbers*"), Mischbehälter ("*stirred tank")* und Kombinationen dieser Absorber. Besonders bevorzugt werden als Wasserabsorber Fallfilmapparate, insbesondere Rohrbündelfallfilmapparate, eingesetzt. Die Wasserabsorptionseinheit **W_{abs1}** kann insbesondere auch einen zusätzlichen Wärmetauscher **W_{z1}** umfassen, der so eingerichtet ist, dass das flüssige Absorptionsmedium, insbesondere **A₁**, kühlbar ist.

In der Wasserdesorptionseinheit **W_{des1},** welche einen Wärmetauscher **Wₓ₁** umfasst, wird insbesondere ein optionaler Schritt des erfindungsgemäßen Verfahrens ["Schritt b)", wobei in diesem Sinne das Verfahren Schritt a) wäre] durchgeführt. Die Wasserdesorptionseinheit **W_{des1}** beruht auf dem Prinzip, dass dem mit Wasser beladenen flüssigen Absorptionsmediums **A₁** Wärme zugeführt wird, die Oberfläche des mit Wasser beladenen flüssigen Absorptionsmediums **A₁** vergrößert wird und gleichzeitig eine möglichst große Verweilzeit des mit Wasser beladenen flüssigen Absorptionsmediums **A₂** in der Wasserdesorptionseinheit **W_{des1}** erreicht wird.

Als Wasserdesorptionseinheit **W_{des1},** welchen einen Wärmetauscher **Wₓ₁** umfasst, können dabei insbesondere die dem Fachmann bekannten Kombinationen aus Wärmetauscher und Wasserdesorber eingesetzt werden, insbesondere Sprühverdampfer ("*horizontal tube evaporator*") mit vorgeschaltetem Wärmetauscher, insbesondere Rohrbündelwärmetauscher ("*shell and tube"),* Plattenwärmetauscher ("*plate and frame"*). Daneben kann die Wasserdesorptionseinheit **W_{des1},** welchen einen Wärmetauscher **Wₓ₁** umfasst, auch ein Wasserdesorber mit integriertem Wärmetauscher sein. Solche Wasserdesorber mit integriertem Wärmetauscher sind insbesondere Kletterfilmverdampfer, Fallfilmverdampfer ("*long-tube vertical*"), Robert-Verdampfer (*"short-tube vertical*"), Zwangsumlaufverdampfer ("*forced circulation"*)*,* Dünnschichtverdampfer ("*agitated thin film"*)*.* Besonders bevorzugt werden als Wasserdesorptionseinheit **W_{des1}** Fallfilmapparate, insbesondere Rohrbündelfallfilmapparate, eingesetzt.

Im Umlauf **U₁** wird insbesondere **A₂** aus Schritt a) des erfindungsgemäßen Verfahrens von der Wasserabsorptionseinheit **W_{abs1}** zu der Wasserdesorptionseinheit **W_{des1}** geführt und noch bevorzugter - dies insbesondere dann wenn das erfindungsgemäße Verfahren kontinuierlich durchgeführt wird - zusätzlich **A₃** aus Schritt b) des erfindungsgemäßen Verfahrens von der Wasserabsorptionseinheit **W_{des1}** zu der Wasserdesorptionseinheit **W_{abs1}** geführt.

Als Umlauf **U₁** wird insbesondere eine Leitung, insbesondere ausgewählt aus der Gruppe bestehend aus Rohr, Schlauch, eingesetzt.

In einer weiteren bevorzugten Ausführungsform weist der Umlauf **U₁** auch eine Pumpe auf.

Das Kontaktieren kann auf jede dem Fachmann bekannte Art und Weise erfolgen, insbesondere in einer Wasserabsorptionseinheit **W_{abs1}**. Durch das Kontaktieren absorbiert das Absorptionsmedium **A₁** mindestens teilweise Feuchtigkeit, also Wasser, aus dem feuchten Gasstrom **G₁**.

Bevorzugt wird das Absorptionsmedium **A₁** beim Kontaktieren des feuchten Gasgemisches **G₁** gekühlt, damit möglichst viel Feuchtigkeit aus dem feuchten Gasgemisch **G₁** absorbiert wird. Dies kann beispielsweise über einen zusätzlichen Wärmetauscher **W_{z1}** in der Wasserabsorptionseinheit **W_{abs1}** erreicht werden. Die Temperatur des Absorptionsmediums **A₁** beim Kontaktieren des feuchten Gasgemisches **G** liegt dabei bevorzugt im Bereich 15 bis 90 °C, bevorzugter 20 bis 80 °C, noch bevorzugter 20 bis 40 °C.

Im erfindungsgemäßen Verfahren wird das feuchte Gasgemisch **G₁** mit einem flüssigen Absorptionsmedium **A₁**, welches eine Mischung aus Triethylenglykol und mindestens einem Salz **S** ausgewählt aus Q⁺A⁻ kontaktiert.

Im erfindungsgemäßen Verfahrens ist Q⁺ aus der Gruppe bestehend aus 1,3-Dimethylimidazoliumkation, 1,3-Diethylimidazoliumkation, 1-Ethyl-3-methylimidazoliumkation ausgewählt und A⁻ ist ein Anion ausgewählt aus der Gruppe bestehend aus Acetat, Propionat. Noch mehr bevorzugter ist Q⁺ dann ein 1,3-Dimethylimidazoliumkation.

Im Falle der Acetate und Proprionate wird nämlich noch ein weiterer positiver Effekt des erfindungsgemäßen Verfahrens beobachtet, zusätzlich zu dem vorhergehend diskutierten Effekt beobachtet: Acetate und Propionate fallen bei Vorliegen von CO₂ im feuchten Gasstrom aus, was zu unerwünschten Ablagerungen in der Apparatur führt. Es wurde nun beobachtet, dass für diese Salze **S** diese Tendenz aufgehoben wird, wenn sie in einer Mischung mit Triethylenglykol vorliegen. Diese Beobachtung war ebenfalls völlig überraschend.

Das flüssige Absorptionsmedium **A₁** kann dabei im erfindungsgemäßen Verfahren in Form der reinen Mischung aus Triethylenglykol und den Salzen **S** eingesetzt werden. Alternativ und bevorzugter ist das flüssige Absorptionsmedium **A₁** eine wässrige Lösung. Bevorzugt beträgtt in dieser das Gesamtgewicht aus Triethylenglykol und allen Salzen **S** mindestens 70 Gew.-%, bezogen auf das Gesamtgewicht der wässrigen Lösung. Noch bevorzugter beträgt in dieser das Gesamtgewicht aus Triethylenglykol und allen Salzen **S** mindestens 80 Gew.-%, bezogen auf das Gesamtgewicht der wässrigen Lösung, noch bevorzugter 85 Gew.-%, noch bevorzugter 90 Gew.-%, noch mehr bevorzugter 99 Gew.-%.

Im erfindungsgemäßen Verfahren wird ein Absorptionsmedium **A₁** eingesetzt, in dem das Verhältnis des Gesamtgewichts des Triethylenglykols zum Gesamtgewicht aller Salze **S** im Bereich 1 : 9 bis 9 : 1, bevorzugter 2 : 8 bis 8 : 2, noch bevorzugter 3 : 7 bis 7 : 3, noch mehr bevorzugter 3 : 7 bis 6 : 4, noch mehr bevorzugter 3 : 7 bis 1 : 1, am bevorzugtesten 3 : 7 bis 4 : 6, am allerbevorzugtesten bei 3 : 7 liegt.

Das im erfindungsgemäßen Verfahren erhaltene Gasgemisch **G₂**, welches einen gegenüber dem feuchten Gasgemisch **G₁** niedrigeren Wassergehalt aufweist, stellt dann den entfeuchteten Gasstrom dar, welcher je nach Anwendung in Form von entfeuchteter Luft wieder Wohn- oder Arbeitsräumen zugeführt werden kann oder im Falle von Erdgas der Energiegewinnung zugeführt werden kann.

Das im erfindungsgemäßen Verfahren erhaltene flüssige Absorptionsmedium **A₂** weist einen gegenüber dem flüssigen Absorptionsmedium **A₁** erhöhten Wassergehalt auf. Es versteht sich von selbst, dass **A₂** hinsichtlich der von ihm umfassten Salze **S** und dem von ihm umfassten Triethylenglykol identisch mit **A₁** ist und sich bevorzugt nur im Wassergehalt von diesem unterscheidet.

In einem optionalen zusätzlichen Schritt des erfindungsgemäßen Verfahrens ["optionaler Schritt b)", wobei das erfindungsgemäße Verfahren als "Schritt a)" zu verstehen ist] erfolgt dann die mindestens teilweise Entfernung von Wasser aus dem flüssigen Absorptionsmedium **A₂**, wodurch ein flüssiges Absorptionsmedium **A₃,** welches einen gegenüber dem flüssigen Absorptionsmedium **A₂** niedrigeren Wassergehalt aufweist, erhalten wird. Dabei wird dem flüssigen Absorptionsmedium **A₂** zusätzlich Wärme zugeführt. Die Zuführung der Wärme und die mindestens teilweise Entfernung kann auf jede dem Fachmann bekannte Art und Weise erfolgen, insbesondere in einer Wasserdesorptionseinheit **W_{des1}** umfassend einen Wärmetauscher **Wₓ₁**. Durch die mindestens teilweise Entfernung von Wasser aus dem flüssigen Absorptionsmedium **A₂** wird ein flüssiges Absorptionsmedium **A₃,** welches einen gegenüber dem flüssigen Absorptionsmedium **A₂** niedrigeren Wassergehalt aufweist, erhalten.

Es versteht sich von selbst, dass **A₃** hinsichtlich der von ihm umfassten Salze **S** und dem von ihm umfassten Triethylenglykol identisch mit **A₂** ist und sich bevorzugt nur im Wassergehalt von diesem unterscheidet.

In einer weiteren bevorzugten Ausführungsform wird das erfindungsgemäße Verfahren kontinuierlich durchgeführt. Dies bedeutet insbesondere, dass im Anschluss an Schritt b) mindestens ein weiteres Mal die Schritte a) und b) durchlaufen werden, und es sich bei dem in dem jeweils zusätzlich durchlaufenen Schritt a) eingesetzten flüssigen Absorptionsmedium **A₁** mindestens teilweise um das flüssige Absorptionsmedium **A₃,** welches aus dem unmittelbar vorher durchlaufenen Schritt b) erhalten wurde, handelt. Das heißt, dass insbesondere der Wassergehalt von den im jeweils zusätzlich durchlaufenen Schritt a) eingesetzten flüssigen Absorptionsmedium **A₁** und dem flüssigen Absorptionsmedium **A₃** aus dem unmittelbar vorher durchlaufenen Schritt b) gleich ist.

Noch bevorzugter wird in dieser Ausführungsform flüssiges Absorptionsmedium **A₂** mit Wärme von flüssigem Absorptionsmedium **A₃** beaufschlagt. Dies kann in einem zusätzlichen Wärmetauscher **W_{y1}** durchgeführt werden, insbesondere ausgewählt aus der Gruppe bestehend aus Rohrbündelwärmetauscher ("*shell and tube"),* Plattenwärmetauscher ("*plate and frame").* Dies ermöglicht eine besonders energieeffiziente Durchführung des erfindungsgemäßen Verfahrens.

Es wird in einem weiteren Aspekt auch eine Vorrichtung **V₂** zur Entfeuchtung eines feuchten Gasgemisches, welches insbesondere CO₂ umfasst, beschrieben, umfassend als Komponenten
(i) ein flüssiges Absorptionsmedium **A_{1*}**, welches eine Mischung aus Triethylenglykol und mindestens einem Salz **S** ausgewählt aus Q⁺A⁻ umfasst,
(ii) mindestens eine Wasserabsorptionseinheit **W_{abs2},** welche dafür eingerichtet ist, das feuchte Gasgemisch mit dem flüssigen Absorptionsmedium **A_{1*}** zu kontaktieren,
(iii) mindestens eine Wasserdesorptionseinheit **W_{des2},** welche einen Wärmetauscher **Wₓ₂** umfasst und welche dafür eingerichtet ist, Wasser aus einem flüssigen Absorptionsmedium **A_{1*}** mindestens teilweise zu entfernen,
(iv) sowie einen Umlauf **U₂,** welcher die Wasserabsorptionseinheit **W_{abs2}** mit der Wasserdesorptionseinheit **W_{des2}** verbindet und mittels welchem das flüssige Absorptionsmedium **A_{1*}** im Kreislauf führbar ist,
dadurch gekennzeichnet, dass
Q⁺ aus der Gruppe bestehend aus 1,3-Dimethylimidazoliumkation, 1,3-Diethylimidazoliumkation, 1-Ethyl-3-methylimidazoliumkation ausgewählt ist,
wobei A⁻ ein Anion ausgewählt aus der Gruppe bestehend aus Acetat, Propionat ist, wobei im flüssigen Absorptionsmedium **A_{1*}** das Verhältnis des Gesamtgewichts des Triethylenglykols zum Gesamtgewicht aller Salze **S** im Bereich 1 : 9 bis 9 : 1 liegt.

Die Vorrichtung **V₂** eignet sich zur Entfeuchtung eines feuchten Gasgemisches, insbesondere umfassend CO₂, bevorzugt umfassend CO₂ mit einem Anteil von 1 bis 140000 ppm, bevorzugter 100 ppm bis 20000 ppm, noch bevorzugter 350 ppm bis 10000 ppm.

Die Vorrichtung **V₂** umfasst folgende Komponenten:
Als erste Komponente umfasst die Vorrichtung **V₂** ein flüssiges Absorptionsmedium **A_{1*}**, welches eine Mischung aus Triethylenglykol und mindestens einem Salz **S** ausgewählt aus Q⁺A⁻ umfasst, wobei
Q⁺ aus der Gruppe bestehend aus 1,3-Dimethylimidazoliumkation, 1,3-Diethylimidazoliumkation, 1-Ethyl-3-methylimidazoliumkation ausgewählt und A⁻ ein Anion ausgewählt aus der Gruppe bestehend aus Acetat, Propionat ist. Noch mehr bevorzugter ist Q⁺ dann ein 1,3-Dimethylimidazoliumkation.

Das flüssige Absorptionsmedium **A_{1*}** kann dabei in Form der reinen Mischung aus Triethylenglykol und allen Salzen **S** eingesetzt werden. Alternativ und bevorzugter ist das flüssige Absorptionsmedium **A_{1*}** eine wässrige Lösung, in welcher bevorzugt das Gesamtgewicht aus Triethylenglykol und allen Salzen **S** mindestens 70 Gew.-%, bezogen auf das Gesamtgewicht der wässrigen Lösung, beträgt. Noch bevorzugter beträgt das Gesamtgewicht aus Triethylenglykol und allen Salzen **S** in **A_{1*}** mindestens 80 Gew.-%, bezogen auf das Gesamtgewicht der wässrigen Lösung, noch bevorzugter 85 Gew.-%, noch bevorzugter 90 Gew.-%, noch mehr bevorzugter 99 Gew.-%.

Im flüssigen Absorptionsmedium **A_{1*}** liegt das Verhältnis des Gesamtgewichts des Triethylenglykols zum Gesamtgewicht aller Salze **S** im Bereich 1 : 9 bis 9 : 1, bevorzugter 2 : 8 bis 8 : 2, noch bevorzugter 3 : 7 bis 7 : 3, noch mehr bevorzugter 3 : 7 bis 6 : 4, noch mehr bevorzugter 3 : 7 bis 1 : 1, am bevorzugtesten 3 : 7 bis 4 : 6, am allerbevorzugtesten bei 3 : 7.

Als zweite Komponente umfasst die Vorrichtung **V₂** eine Wasserabsorptionseinheit **W_{abs2},** welche dafür eingerichtet ist, das feuchte Gasgemisch mit dem flüssigen Absorptionsmedium **A_{1*}** zu kontaktieren. Die Wasserabsorptionseinheit **W_{abs2}** kann insbesondere einen zusätzlichen Wärmetauscher **W_{z2}** umfassen, der so eingerichtet ist, dass das flüssige Absorptionsmedium **A_{1*}** kühlbar ist. Als solche Wasserabsorptionseinheit **W_{abs2}** können dabei insbesondere die dem Fachmann bekannten Wasserabsorber eingesetzt werden. Sie beruhen auf dem Prinzip, dass bei der Absorption des Wassers die Oberfläche des flüssigen Absorptionsmediums **A_{1*}** vergrößert wird und gleichzeitig eine möglichst große Verweilzeit des flüssigen Absorptionsmediums **A_{1*}** im Wasserabsorber erreicht wird. Insbesondere können hier Wasserabsorber ausgewählt aus der folgenden Gruppe eingesetzt werden: Festbett ("*packed beds"*), Sprühkolonne ("*spray columns"*), Fallfilmapparate (*"falling-films"*), Blasensäule ("*bubble columns"*), Kolonnen mit mehreren Böden ("*tray column"*), Nasswäscher (zum Beispiel "Venturi *scrubbers"*), Mischbehälter ("*stirred tank"*) und Kombinationen dieser Absorber. Besonders bevorzugt werden als Wasserabsorber Fallfilmapparate, insbesondere Rohrbündelfallfilmapparate, eingesetzt.

Als dritte Komponente umfasst die Vorrichtung **V₂** eine Wasserdesorptionseinheit **W_{des2},** welchen einen Wärmetauscher **Wₓ₂** umfasst und welche dafür eingerichtet ist, Wasser aus dem flüssigen Absorptionsmedium **A_{1*}** mindestens teilweise zu entfernen. Dazu können insbesondere die dem Fachmann bekannten Kombinationen aus Wärmetauscher und Wasserdesorber eingesetzt werden. Die Wasserdesorptionseinheit **W_{des2}** beruht auf dem Prinzip, dass dem flüssigen Absorptionsmediums **A_{1*}** Wärme zugeführt wird, die Oberfläche des flüssigen Absorptionsmediums **A_{1*}** vergrößert wird und gleichzeitig eine möglichst große Verweilzeit des flüssigen Absorptionsmediums **A_{1*}** in der Wasserdesorptionseinheit erreicht wird.

Als Wasserdesorptionseinheit **W_{des2},** welchen einen Wärmetauscher **Wₓ₂** umfasst, können dabei insbesondere die dem Fachmann bekannten Kombinationen aus Wärmetauscher und Wasserdesorber eingesetzt werden, insbesondere Sprühverdampfer ("*horizontal tube evaporator*") mit vorgeschaltetem Wärmetauscher, insbesondere Rohrbündelwärmetauscher ("*shell and tube"),* Plattenwärmetauscher ("*plate and frame"*). Daneben kann die Wasserdesorptionseinheit **W_{des2},** welchen einen Wärmetauscher **Wₓ₂** umfasst, auch ein Wasserdesorber mit integriertem Wärmetauscher sein. Solche Wasserdesorber mit integriertem Wärmetauscher sind insbesondere Kletterfilmverdampfer, Fallfilmverdampfer ("*long-tube vertical*"), Robert-Verdampfer (*"short-tube vertical*"), Zwangsumlaufverdampfer ("*forced circulation"*), Dünnschichtverdampfer ("*agitated thin film"*). Besonders bevorzugt werden als Wasserdesorptionseinheit **W_{des2}** Fallfilmapparate, insbesondere Rohrbündelfallfilmapparate, eingesetzt.

Als vierte Komponente umfasst die Vorrichtung **V₂** einen Umlauf **U₂,** welcher die Wasserabsorptionseinheit **W_{abs2}** mit der Wasserdesorptionseinheit **W_{des2}** verbindet und mittels welchem das flüssige Absorptionsmedium **A_{1*}** im Kreislauf führbar ist. Bevorzugt ist der Umlauf **U₂** eine Leitung, noch bevorzugter ausgewählt aus der Gruppe bestehend aus Rohr, Schlauch. In einer weiteren bevorzugten Ausführungsform weist der Umlauf **U₂** auch eine Pumpe auf.

In einer bevorzugten Ausführungsform umfasst die Vorrichtung **V₂** einen weiteren Wärmetauscher **W_{y2}** (zusätzlich zu dem von der Wasserdesorptionseinheit **W_{des2}** umfassten Wärmetauscher **Wₓ₂**). Der Wärmetauscher **W_{y2}** ist so eingerichtet, dass flüssiges Absorptionsmedium **A_{1*}**, welches von der Wasserabsorptionseinheit **W_{abs2}** der Wasserdesorptionseinheit **W_{des2}** zugeführt wird, mit Wärme von flüssigem Absorptionsmedium **A_{1*}**, welches von der Wasserdesorptionseinheit **W_{des2}** weggeführt wird, beaufschlagbar ist. Dies kann insbesondere dadurch gewährleistet werden, dass als Wärmetauscher **W_{y2}** insbesondere ein Wärmetauscher ausgewählt aus Rohrbündelwärmetauscher ("*shell and tube"*), Plattenwärmetauscher ("*plate and frame"*) eingesetzt wird.

In einer weiteren bevorzugten Ausführungsform liegt die Vorrichtung **V₂** als Teil einer Absorptionskältemaschine (erfindungsgemäß synonym mit "Absorptionswärmepumpe") vor. Diese Absorptionskältemaschine umfasst dann als weitere Komponenten einen Kondensator (auch als "Kondenser" zu bezeichnen), einen Verdampfer und ein Kältemittel, wobei das Kältemittel Wasser ist.

Der Kondensator ist insbesondere mit der Wasserdesorptionseinheit **W_{des2}** über eine Leitung verbunden und dafür eingerichtet, Wasser, welches vom flüssigen Absorptionsmedium **A_{1*}** in der Wasserdesorptionseinheit **W_{des2}** mindestens teilweise abgetrennt wird, zu kondensieren. Bevorzugt umfasst der Kondensator auch einen Kühlwasserkreislauf.

Der Verdampfer ist insbesondere mit dem Kondensator über eine Leitung verbunden (die eine Drossel umfassen kann), und über eine weitere Leitung mit der Wasserabsorptionseinheit **W_{abs2}** verbunden und ist dafür eingerichtet, kondensiertes Wasser aus dem Kondensator zu verdampfen. Bevorzugt umfasst der Verdampfer auch einen Druck < 1 bar, noch bevorzugter < 0.1 bar, um die Verdampfung des kondensierten Wassers bei möglichst geringen Temperaturen zu ermöglichen. Weiter bevorzugt kann der Verdampfer zusätzlich auch eine Vorrichtung umfassen, aus welcher Wärme abgezogen werden kann und damit das kondensierte Wasser verdampft werden kann (beispielsweise eine Kühlmittelleitung, in der Kühlmittel in den Raum geleitet wird, in welchem Wasser verdampft wird).

Schließlich bezieht sich die vorliegende Erfindung auch auf das Absorptionsmedium **A_{1*}** selbst, wobei das Absorptionsmedium **A_{1*}** eine Mischung aus Triethylenglykol und mindestens einem Salz **S** ausgewählt aus der Gruppe bestehend aus Q⁺A⁻ umfasst, wobei
Q⁺ aus der Gruppe bestehend aus 1,3-Dimethylimidazoliumkation, 1,3-Diethylimidazoliumkation, 1-Ethyl-3-methylimidazoliumkation ausgewählt ist, und wobei A⁻ ein Anion ausgewählt aus der Gruppe bestehend aus Acetat, Propionat ist, und wobei das Verhältnis des Gesamtgewichts des Triethylenglykols zum Gesamtgewicht aller Salze **S** im Bereich 1 : 9 bis 9 : 1 liegt.

Das flüssige Absorptionsmedium **A_{1*}** kann dabei in Form der reinen Mischung aus Triethylenglykol und allen Salzen **S** sein. Alternativ und bevorzugter ist das flüssige Absorptionsmedium **A_{1*}** eine wässrige Lösung, in welcher bevorzugt das Gesamtgewicht aus Triethylenglykol und allen Salzen **S** mindestens 70 Gew.-%, bezogen auf das Gesamtgewicht der wässrigen Lösung, beträgt. Noch bevorzugter beträgt in **A_{1*}** das Gesamtgewicht aus Triethylenglykol und allen Salzen **S** mindestens 80 Gew.-%, bezogen auf das Gesamtgewicht der wässrigen Lösung, noch bevorzugter 85 Gew.-%, noch bevorzugter 90 Gew.-%, noch mehr bevorzugter 99 Gew.-%.

Im erfindungsgemäßen Absorptionsmediums **A_{1*}** liegt das Verhältnis des Gesamtgewichts des Triethylenglykols zum Gesamtgewicht aller Salze **S** im Bereich 1 : 9 bis 9 : 1, bevorzugter 2 : 8 bis 8 : 2, noch bevorzugter 3 : 7 bis 7 : 3, noch mehr bevorzugter 3 : 7 bis 6 : 4, noch mehr bevorzugter 3 : 7 bis 1 : 1, am bevorzugtesten 3 : 7 bis 4 : 6, am allerbevorzugtesten 3 : 7.

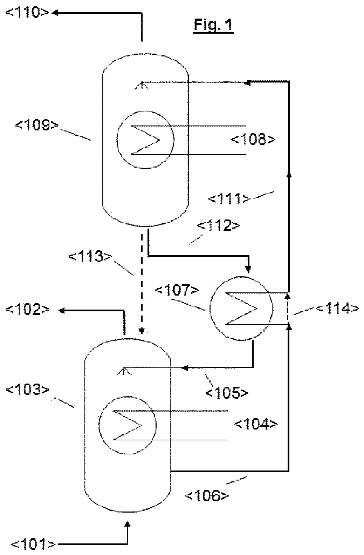

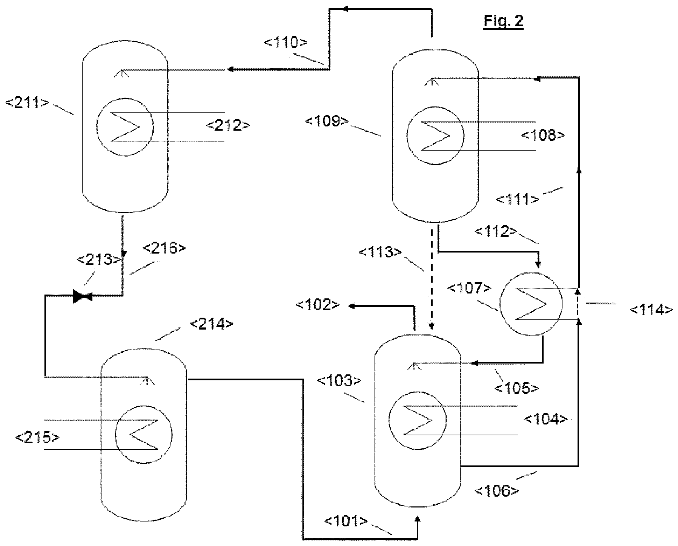

Die im Folgenden erläuterten Figuren 1 und 2 geben bevorzugte Ausführungsformen des erfindungsgemäßen Verfahrens und der erfindungsgemäßen Vorrichtung an.

In der Figur 1 (abgekürzt als "Fig. 1") ist eine Ausführungsform der erfindungsgemäßen Vorrichtung **V₂** bzw. **V₁** wiedergegeben.

Die in Figur 1 dargestellte Vorrichtung **V₁** umfasst eine Wasserabsorptionseinheit **W_{abs1}** <103> (mit optionalem zusätzlichen Wärmetauscher **W_{z1}** <104>) in welche eine Leitung <101> mündet und von welcher eine Leitung <102> wegführt, eine Wasserdesorptionseinheit **W_{des1},** welche einen Wärmetauscher **Wₓ₁** <108> und einen Wasserdesorber <109> aufweist, und in die Leitung <111> mündet und von der Leitungen <110>, <112> und <113> wegführen, und einen Umlauf **U₂,** welcher aus den Leitungen <106>, <111> und <113> bzw. <106>, <111>, <112> und <105> (bzw. auch jeweils mit Leitung <114>) gebildet wird. Daneben kann die Vorrichtung in Figur 1 auch optional einen weiteren Wärmetauscher **W_{y1}** <107> umfassen, in den die Leitungen <106> und <112> münden und von dem die Leitungen <105> und <111> wegführen. Zusätzlich umfasst die Vorrichtung **V₁** auch ein flüssiges Absorptionsmedium **A₁**. Dieses befindet sich in einer oder mehreren der vorgenannten Komponenten Wasserabsorptionseinheit **W_{abs1}**, Wasserdesorptionseinheit **W_{des1},** Umlauf **U₁**. Die Wasserabsorptionseinheit **W_{abs1}** <103> kann optional auch einen zusätzlichen Wärmetauscher **W_{z1}** <104> aufweisen, mit dem das flüssige Absorptionsmedium **A₁** auf eine Temperatur von 30 °C bis 100 °C, bevorzugt 30 °C bis 60 °C, bevorzugter 30 °C bis 50 °C, noch bevorzugter 40 °C bis 50 °C gebracht werden kann. Optional kann der Umlauf **U₂** auch zusätzlich eine Pumpe zur Beförderung des flüssigen Absorptionsmediums **A₁** aufweisen.

Das erfindungsgemäße Verfahren wird nun beispielhaft mit Bezug auf Vorrichtung **V₁** anhand der Figur 1 beschrieben:
Ein Strom feuchten Gasgemisches **G₁** mit einer Temperatur von 30 °C bis 100 °C (dieser kann zum Beispiel feuchte Luft, feuchtes Erdgas oder feuchtes Gasgemisch,- bezüglich dieser Möglichkeit siehe auch Figur 2 - stammen) wird über Leitung <101> einer Wasserabsorptionseinheit **W_{abs1}** <103> zugeführt und dort mit dem flüssigen Absorptionsmedium **A₁**, welches der Wasserabsorptionseinheit **W_{abs1}** <103> über die Leitung <105> oder über die Leitung <113> zugeführt wird, kontaktiert. Die Wasserabsorptionseinheit **W_{abs1}** <103> kann jede der oben für **W_{abs1}** angegebenen Wasserabsorber sein, insbesondere ein Fallfilmapparat. Durch Kontaktieren des über Leitung <101> zugeführten Gasgemisches **G₁** in der Wasserabsorptionseinheit **W_{abs1}** <103> mit dem flüssigen Absorptionsmedium **A₁**, welches über die Leitung <105> oder über die Leitung <113> zugeführt wird, werden ein flüssiges Absorptionsmedium **A₂**, welches einen gegenüber dem flüssigen Absorptionsmedium **A₁** erhöhten Wassergehalt aufweist, und ein Strom eines Gasgemischs **G₂**, der über die Leitung <102> abgeleitet wird, wobei **G₂** einen gegenüber dem feuchten Gasgemisch **G₁** niedrigeren Wassergehalt aufweist, erhalten. Bei **G₂** handelt es sich je nach Anwendung insbesondere um entfeuchtetes Erdgas. Die Wasserabsorptionseinheit **W_{abs1}** <103> kann optional auch einen zusätzlichen Wärmetauscher **W_{z1}** <104> aufweisen, mit dem das flüssige Absorptionsmedium **A₁** auf eine Temperatur von 30 °C bis 100 °C, bevorzugt 30 °C bis 60 °C, bevorzugter 30 °C bis 50 °C, noch bevorzugter 40 °C bis 50 °C gebracht werden kann. Bevorzugt über die Leitungen <106>, <111> und den Wärmetauscher **W_{y1}** <107> (oder, falls der Wärmetauscher **W_{y1}** <107> nicht eingesetzt wird, über die Leitungen <106>, <111> und <114>) wird dann das flüssige Absorptionsmedium **A₂** zur Wasserdesorptionseinheit **W_{des1}** geführt, die aus dem Wärmetauscher **Wₓ₁** <108> und dem Wasserdesorber <109> besteht. Im optionalen Wärmetauscher **W_{y1}** <107> kann das mit Wasser beladene flüssige Absorptionsmedium **A₂** zusätzlich mit Wärme beaufschlagt werden. Im Wasserdesorber <109> findet dann die mindestens teilweise Entfernung von Wasser aus dem flüssigen Absorptionsmedium **A₂** statt, wodurch ein flüssiges Absorptionsmedium **A₃,** welches einen gegenüber dem flüssigen Absorptionsmedium **A₂** niedrigeren Wassergehalt aufweist, erhalten wird. Das abgetrennte Wasser wird dann flüssig oder als Dampf, bevorzugt als Dampf, über eine Leitung <110> aus dem Wasserdesorber <109> abgeleitet. Das flüssige Absorptionsmedium **A₃** wird dann aus dem Wasserdesorber <109> abgeleitet und der Wasserabsorptionseinheit **W_{abs1}** <103> wieder zugeführt. Dies kann entweder direkt passieren, das heißt über die in Figur 1 gestrichelt eingezeichnete Leitung <113>. Alternativ und bevorzugt kann das flüssige Absorptionsmedium **A₃** auch über die Leitung <112> dem optionalen Wärmetauscher **W_{y1}** <107> zugeführt werden, in welchem dann eine Beaufschlagung des über Leitung <106> dem optionalen Wärmetauscher **W_{y1}** <107> zugeführten, flüssigen Absorptionsmediums **A₂** mit Wärme aus dem über Leitung <112> dem optionalen Wärmetauscher **W_{y1}** <107> zugeführten flüssigen Absorptionsmediums **A₃** erfolgt. Nach Zuführung des konzentrierten flüssigen Absorptionsmediums **A₃** in die Wasserabsorptionseinheit **W_{abs1}** über Leitung <105> oder <113> wird dieses erneut als **A₁** zur mindestens teilweisen Entfeuchtung des Gasstroms in einem neuen Zyklus eingesetzt.

In der Figur 2 (abgekürzt als "Fig. 2") ist schematisch eine Absorptionskältemaschine wiedergegeben, in welche eine Vorrichtung **V₂** integriert ist. Die Bestandteile <101> bis <114> sind wie für die in Figur 1 beschriebene Vorrichtung **V₂** angegeben. Zusätzlich umfasst die Absorptionskältemaschine in Figur 2 auch einen Kondensator <211> welcher mit der Wasserdesorptionseinheit **W_{des2}** <109> über die Leitung <110> verbunden und dafür eingerichtet ist, Wasser, welches vom flüssigen Absorptionsmedium **A_{1*}** in der Wasserdesorptionseinheit **W_{des2}** mindestens teilweise abgetrennt wird, zu kondensieren. Bevorzugt umfasst der Kondensator <211> auch einen Wärmetauscher <212>, mit dem Kühlwasser zugeführt werden kann.

Die in der Figur 2 gezeigte Absorptionskältemaschine umfasst auch einen Verdampfer <214>, der mit dem Kondensator <211> über eine Leitung <216> (die optional eine Drossel <213> umfassen kann) verbunden ist, und über die Leitung <101> mit der Wasserabsorptionseinheit **W_{abs2}** verbunden ist. Der Verdampfer <214> ist dafür eingerichtet, kondensiertes Wasser aus dem Kondensator zu verdampfen. Weiter bevorzugt kann der Verdampfer <214> zusätzlich auch einen Wärmetauscher <215> umfassen, der ein Medium zuführt, und wobei aus dem Medium Wärme abgezogen wird, um so das kondensierte Wasser zu verdampfen (beispielsweise eine Kühlmittelleitung mit insbesondere Wasser als Kühlmittel, wobei dieses Kühlmittel in den Verdampfer <214> geleitet wird).

In einer Ausführungsform des erfindungsgemäßen Verfahrens (im Folgenden anhand Vorrichtung **V₁** mit Bezug auf Figur 2 beschrieben) wird feuchtes Gasgemisch **G,** welches aus dem Verdampfer <214> stammt, durch die Leitung <101> der Wasserabsorptionseinheit **W_{abs1}** <103> zugeleitet. Das in der Wasserdesorptionseinheit **W_{des1}** abgetrennte Wasser wird über die Leitung <110> dem Kondensator <211> zugeführt, in welchem dieses wieder kondensiert wird. Gegebenenfalls wird dazu ein Kühlwasserkreislauf als Wärmetauscher <212>, der im Kondensator angebracht ist, ebenfalls verwendet. Das kondensierte Wasser wird dann über eine Leitung <216> dem Verdampfer <214> zugeführt, in welchem die Verdampfung des Wassers insbesondere bei niedrigen Drücken stattfindet und so ein Kühlungseffekt eintritt. Optional kann dazu auch eine Drossel <213> verwendet werden. Dadurch wird im Verdampfer <214> eine kühlende Wirkung erzielt, und es kann zum Beispiel über den Wärmetauscher <215> Kühlmittel gekühlt werden. Der entstehende Wasserdampf wird dann wieder über Leitung <101> der Wasserabsorptionseinheit **W_{abs1}** <103> zugeführt.

Die nachfolgenden Beispiele sollen die vorliegende Erfindung erläutern, ohne diese in irgendeiner Form zu beschränken.

### Beispiele

### 1. Materialien

Die verwendeten ionischen Flüssigkeiten wurden von Sigma-Aldrich bzw. nach im Stand der Technik beschriebenen Vorschriften (z.B. zusammengefasst in der DE 10 2014 214 670 A1) erhalten. Der CO₂-Gehalt des Gasstroms wurde mittels Infrarotspektroskopie bestimmt.

### 2. Viskositätsmessungen

Es wurde die Viskosität folgender ionischer Flüssigkeiten (Vergleichsversuche: rein; erfinderische Beispiele in Mischung mit 30 Gew.-% Triethylenglykol) nach DIN 54453 vermessen. Die Ergebnisse sind in der folgenden Tabelle 1 dargestellt:

**Tabelle 1**

| Getestete ionische Flüssigkeit | Rein (> 99 %) (Vergleich) | Mischung mit 30 Gew.-% TEG (erfinderische Beispiele) |
|---|---|---|
| 1,3-Dimethylimidazoliumpropionat | 46,1 | 25,8 |
| 1-Ethyl-3-methylimidazoliumdiethylphosphat | 135,8 | 36,6 |
| 1-Ethyl-3-methylimidazoliummethylsulfonat | 40,5 | 14,4 |
| 1,3-Dimethylimidazoliumacetat | 43,0 | 26,3 |
| 1,3-Dimethylimidazoliumacetat | 36,6 | 24,4 |
| 1,3-Dimethylimidazoliumdiethylphosphat | 134,1 | 42,3 |

Aus der Tabelle ist ersichtlich, dass bei den Mischungen mit 30 Gew.-% TEG gemäß den erfinderischen Beispielen bei allen ionischen Flüssigkeiten eine geringere Viskosität gegenüber der reinen ionischen Flüssigkeit erreicht werden konnte. Dadurch eignen sich die Mischungen gemäß den erfinderischen Beispielen viel besser zur Verwendung etwa in der Entfeuchtung von Gasströmen als die Reinsubstanzen.

### 3. Versuche zu Gasströmen mit CO₂

100 mL der in Tabelle 2 genannten ionischen Flüssigkeiten wurden jeweils in reiner Form und in Mischung mit 30 Gew.-% Triethylenglykol mit einem Gasstrom enthaltend 140000 ppm CO₂ in einem Reaktionsgefäß ("*bubble cell*") mit Fritte für 1 h bei 40 °C kontaktiert.

Die beobachteten Ergebnisse sind in der Tabelle 2 zusammengefasst.

**Tabelle 2**

| Getestete ionische Flüssigkeit | Rein | Mischung mit 30 Gew.-% TEG |
|---|---|---|
| 1,3-Dimethylimidazoliumpropionat | Niederschlag | Kein Niederschlag |
| 1,3-Dimethylimidazoliumacetat | Niederschlag | Kein Niederschlag |
| 1-Ethyl-3-methylimidazoliumchlorid | Niederschlag | Niederschlag |
| 1,3-Dimethylimidazoliumchlorid | Niederschlag | Niederschlag |
| 1,3-Dimethylimidazoliummethylsulfonat | Niederschlag | Niederschlag |

Aus den Ergebnissen gemäß Tabelle 2 ist ersichtlich, dass nur im Falle des MMIM Ac und MMIM Prop das Ausfallen der ionischen Flüssigkeiten bei Kontakt mit CO₂ durch Zugabe von Triethylenglykol verhindert werden konnte.

## Patentansprüche

1. Verfahren zur Entfeuchtung eines feuchten Gasgemisches **G₁**, wobei das feuchte Gasgemisch **G₁** CO₂ umfasst und wobei das feuchte Gasgemisch **G₁** mit einem flüssigen Absorptionsmedium **A₁**, welches eine Mischung aus Triethylenglykol und mindestens einem Salz **S** ausgewählt aus Q⁺A⁻ umfasst, kontaktiert wird,
wodurch ein Gasgemisch **G₂**, welches einen gegenüber dem feuchten Gasgemisch **G₁** niedrigeren Wassergehalt aufweist, und ein flüssiges Absorptionsmedium **A₂**, welches einen gegenüber dem flüssigen Absorptionsmedium **A₁** erhöhten Wassergehalt aufweist, erhalten werden,
wobei Q⁺ aus der Gruppe bestehend aus 1,3-Dimethylimidazoliumkation, 1,3-Diethylimidazoliumkation, 1-Ethyl-3-methylimidazoliumkation ausgewählt ist, und wobei A⁻ ein Anion ausgewählt aus der Gruppe bestehend aus Acetat, Propionat ist,
und wobei im flüssigen Absorptionsmedium **A₁** das Verhältnis des Gewichts des Triethylenglykols zum Gesamtgewicht aller Salze **S** im Bereich 1 : 9 bis 9 : 1 liegt.

2. Verfahren nach Anspruch 1, wobei das flüssige Absorptionsmedium **A₁** eine wässrige Lösung ist, in welcher bevorzugt das Gesamtgewicht von Triethylenglykol und allen Salzen **S** mindestens 70 Gew.-%, bezogen auf das Gesamtgewicht der wässrigen Lösung, beträgt.

3. Verfahren nach Anspruch 1 oder 2, wobei der Anteil an CO₂ im feuchten Gasgemisch **G₁** im Bereich 1 ppm bis 140000 ppm liegt.

4. Absorptionsmedium, welches eine Mischung aus Triethylenglykol und mindestens einem Salz **S** ausgewählt aus Q⁺A⁻ umfasst, wobei Q⁺ aus der Gruppe bestehend aus 1,3-Dimethylimidazoliumkation, 1,3-Diethylimidazoliumkation, 1-Ethyl-3-methylimidazoliumkation ausgewählt ist und A⁻ ein Anion ausgewählt aus der Gruppe bestehend aus Acetat, Propionat ist,
in welchem das Verhältnis des Gewichts des Triethylenglykols zum Gesamtgewicht aller Salze **S** im Bereich 1 : 9 bis 9 : 1 liegt.

5. Absorptionsmedium nach Anspruch 4, welches eine wässrige Lösung ist, in welcher bevorzugt das Gesamtgewicht aus Triethylenglykol und allen Salzen **S** mindestens 70 Gew.-%, bezogen auf das Gesamtgewicht der wässrigen Lösung, beträgt.

## Claims

1. Process for dehumidifing a moist gas mixture **G₁**, wherein the moist gas mixture **G₁** comprises CO₂ and wherein the moist gas mixture **G₁** is contacted with a liquid absorption medium **A₁** which comprises a mixture of triethylene glycol and at least one salt **S** selected from Q⁺A⁻ to obtain a gas mixture **G₂** which has a lower water content compared to moist gas mixture **G₁** and a liquid absorption medium **A₂** which has an elevated water content compared to the liquid absorption medium **A₁**,
wherein Q⁺ is selected from the group consisting of 1,3-dimethylimidazolium cation, 1,3-diethylimidazolium cation, 1-ethyl-3-methylimidazolium cation and A⁻ is an anion selected from the group consisting of acetate, propionate,
and wherein in the liquid absorption medium **A₁** the ratio of the weight of the triethylene glycol to the total weight of all salts **S** is in the range 1 : 9 to 9 : 1.

2. Process according to Claim 1, wherein the liquid absorption medium **A₁** is an aqueous solution in which the total weight of triethylene glycol and all salts **S** is preferably at least 70 wt% based on the total weight of the aqueous solution.

3. Process according to Claim 1 or 2, wherein the proportion of CO₂ in the moist gas mixture **G₁** is in the range 1 ppm to 140,000 ppm.

4. Absorption medium which comprises a mixture of triethylene glycol and at least one salt **S** selected from Q⁺A⁻,
wherein Q⁺ is selected from the group consisting of 1,3-dimethylimidazolium cation, 1,3-diethylimidazolium cation, 1-ethyl-3-methylimidazolium cation and A⁻ is an anion selected from the group consisting of acetate, propionate,
in which the ratio of the weight of the triethylene glycol to the total weight of all salts **S** is in the range 1 : 9 to 9 : 1.

5. Absorption medium according to Claim 4 which is an aqueous solution in which the total weight of triethylene glycol and all salts **S** is preferably at least 70 wt% based on the total weight of the aqueous solution.

## Revendications

1. Procédé de déshumidification d'un mélange gazeux humide **G₁**, le mélange gazeux humide **G₁** comprenant du CO₂, et le mélange gazeux humide **G₁** étant mis en contact avec un milieu d'absorption liquide **A₁**, qui comprend un mélange de triéthylène glycol et d'au moins un sel **S** choisi parmi Q⁺A⁻,
un mélange gazeux **G₂**, qui présente une teneur en eau plus faible en comparaison du mélange gazeux humide **G₁**, et un milieu d'absorption liquide **A₂**, qui présente une teneur en eau plus élevée par rapport au milieu d'absorption liquide **A₁**, étant obtenus, Q⁺ étant choisi dans le groupe constitué par le cation 1,3-diméthylimidazolium, le cation 1,3-diéthylimidazolium, le cation 1-éthyl-3-méthylimidazolium, et A⁻ étant un anion choisi dans le groupe constitué par acétate, propionate,
et le rapport entre le poids du triéthylène glycol et le poids total de tous les sels **S** dans le milieu d'absorption liquide **A₁** se situant dans la plage allant de 1:9 à 9:1.

2. Procédé selon la revendication 1, dans lequel le milieu d'absorption liquide **A₁** est une solution aqueuse dans laquelle le poids total du triéthylène glycol et de tous les sels **S** est de préférence d'au moins 70 % en poids, par rapport au poids total de la solution aqueuse.

3. Procédé selon la revendication 1 ou 2, dans lequel la proportion de CO₂ dans le milieu gazeux humide **G₁** se situe dans la plage allant de 1 ppm à 140 000 ppm.

4. Milieu d'absorption, qui comprend un mélange de triéthylène glycol et d'au moins un sel **S** choisi parmi Q⁺A⁻, Q⁺ étant choisi dans le groupe constitué par le cation 1,3-diméthylimidazolium, le cation 1,3-diéthylimidazolium, le cation 1-éthyl-3-méthylimidazolium, et A⁻ étant un anion choisi dans le groupe constitué par acétate, propionate,
dans lequel le rapport entre le poids du triéthylène glycol et le poids total de tous les sels **S** se situe dans la plage allant de 1:9 à 9:1.

5. Milieu d'absorption selon la revendication 4, qui est une solution aqueuse, dans laquelle le poids total du triéthylène glycol et de tous les sels **S** est de préférence d'au moins 70 % en poids, par rapport au poids total de la solution aqueuse.
